(19) Europäisches Patentamt
European Patent Office
Office européen des brevets

(11) Publication number: 0 100 531 A2

# (12) EUROPEAN PATENT APPLICATION

(21) Application number: 83107455.4

(22) Date of filing: 28.07.83

(51) Int. Cl.³: B 01 J 8/26
B 01 J 29/38, C 10 G 11/18

(30) Priority: 03.08.82 US 404676

(43) Date of publication of application: 15.02.84 Bulletin 84/7

(84) Designated Contracting States: AT BE CH DE FR GB IT LI LU NL SE

(71) Applicant: AIR PRODUCTS AND CHEMICALS, INC.
Route no. 222
Trexlertown Pennsylvania 18087(US)

(72) Inventor: Hegarty, William Patrick
31 Fairway Lane
Wescosville, PA 18106(US)

(74) Representative: Berg, Wilhelm, Dr. et al,
Dr. Berg, Dipl.-Ing. Stapf, Dipl.-Ing. Schwabe, Dr. Dr. Sandmair Mauerkircherstrasse 45
D-8000 München 80(DE)

## (54) A process for the regeneration of particulate matter with oxygen and carbon dioxide.

(57) A process is disclosed for a regenerator operated with carbon dioxide and oxygen-containing regenerator feed gas wherein the flue gas emanating from the overhead of the regenerator as effluent is processed to reduce $NO_x$ contaminant and is oxidized to convert carbon monoxide to carbon dioxide. A portion of the resultant compressed stream is recycled as a diluent $CO_2$ gas to be mixed with oxygen regenerator feed gas. Another portion of the stream is compressed, dried and distilled to remove $SO_x$ and a pure $CO_2$ product for export. Residual $CO_2$ and $O_2$ from the distillation is recycled to the regenerator optionally.

EP 0 100 531 A2

211-P-US02763

# A PROCESS FOR THE REGENERATION OF PARTICULATE MATTER WITH OXYGEN AND CARBON DIOXIDE

## TECHNICAL FIELD

The present invention is directed to the field of fluidized bed catalytic cracker hydrocarbon refining processes and fluid coking. More particularly, the present invention is directed to the regeneration of catalyst which has become coked during service in a fluidized bed catalytic cracker reaction zone. The present invention is directed to the use of pure oxygen diluted with carbon dioxide as the fluidizing and oxidant gas stream in a fluidizied bed catalytic cracker regenerator. The recovery and partial recycle of the effluent gases from such a regeneration process are also the subject of the present invention.

## BACKGROUND OF THE PRIOR ART

With the exhaustion of many sources of high quality petroleum resources, the refining industry has turned to the recovery and refining of less desirable petroleum stocks and to the further refining of residues from

refining operations of traditional or higher quality petroleum stocks. The refining of low quality stock or the heavy residues from the refining of high quality stocks present problems for the refining industry with respect to the capability of the refining process to handle more complex hydrocarbons of higher molecular weight as well as increased carbon residues, organometallic, nitrogen and sulfur contaminants.

A traditional refining technique has been the use of a fluidized bed catalytic cracker for refining of petroleum stocks. Despite the agitation and inherent abrasion of catalyst in a fluidized bed reactor, the cracking operation which occurs in petroleum refining leaves the particulate catalyst in an inactivated state due to coke buildup on the surface of the catalyst. In order to perform a relatively steady state operation in the fluidized catalytic cracker, it is necessary to remove coked catalyst from the reactor on a continuous basis and to regenerate such catalyst. The regenerated catalyst is then returned to the fluidized catalytic cracker reactor without shut down of the latter.

Regeneration is usually performed in a fluidized bed with an upflowing oxidant gas and elevated temperatures in the regenerator. In this manner, coke on the catalyst is burned and removed as carbon monoxide and carbon dioxide. This exothermic combustion provides heat which is absorbed by the regenerator catalyst, and the heated catalyst is returned to the fluidized bed catalytic cracker reactor wherein the regeneration heat is utilized in the cracking process.

As heavier and heavier petroleum stocks are refined in this manner, additional coking of the catalyst occurs, and additional contamination of the catalyst with nitrogen and sulfur constituents is experienced. The removal of such coke requires a given through-put

of oxidant gas. As the coke on catalyst value has gone up with the refining of such heavy residual petroleum stocks, the necessity for more gas through-put in the regenerator has occurred, and this requirement has been the limiting factor on the amount of heavy residual petroleum stock which may be processed in the fluidized catalytic cracker reaction zone. Additionally, as coke on catalyst goes up, more coke burning occurs in regeneration and added heat releases become a limitation on residuum processing.

The traditional oxidant gas used in a regenerator is air. In order to meet the through-put requirements of regenerators experiencing elevated levels of coke on catalyst, the industry has utilized oxygen-enriched air mixtures in order to complete the combustion requirements necessary for removal of the coke from the catalyst.

In the conventional regeneration of catalyst, air or oxygen-enriched air results in a large amount of nitrogen being passed through the regenerating catalyst with no beneficial effect. Such effluent gases generally contain nitrogen, carbon dioxide, carbon monoxide, oxygen, hydrogen sulfide, sulfur oxides and nitrogen oxides. The high nitrogen content of the effluent gas renders the recovery of the carbon dioxide and the conversion of carbon monoxide to hydrogen impractical and uneconomical. In addition, the sulfur and nitrogen oxides and the carbon monoxide constitute a pollution problem. This problem is heightened by the processing of heavy residuum which contain high levels of nitrogen and sulfur constituents.

More recently, a hot regeneration technique has emerged that uses special catalyst in the fluidized catalytic cracker that promotes the burning of carbon monoxide to carbon dioxide with attendant higher temperatures in the regenerator and increased heat release.

The special catalyst sorbs at least some of the sulfur oxides, but the nitrogen oxides remain untreated.

It is known to utilize an oxygen-containing gas which is diluted with various inert gases. In U.S. Patent 4,146,463, a process is set forth wherein an oxygen-containing gas, such as air is diluted with moderators, such as carbon dioxide, nitrogen or regenerator recycle gas as the oxidant for the coked catalyst. Sulfur oxides and carbon monoxide from other portions of the refinery are also introduced into the regenerator.

In U.S. Patent 4,118,339, a process is disclosed wherein the effluent gas from a fluidized catalytic cracker regenerator is controlled by the introduction of a noble metal oxidation promoter-containing solvent into the regeneration zone. The promoter catalyzes essentially complete combustion of the regenerator carbon monoxide and results in operation at higher temperatures with zeolite thermally stable catalysts and avoids the carbon monoxide pollutant problem encountered with in previous regeneration techniques. The increased regeneration gas, heat release and regeneration temperature, however, intensify these limitations with heavy residuum feeds.

U.S. Patent 4,274,942 discloses a process for the regeneration of fluidized catalytic cracker catalyst wherein control of the sulfur oxide emissions is performed by sensing the output from the regeneration zone and pretreating the coked catalyst with steam before regeneration is performed.

Additional patents of interest include U.S. Patent 2,322,075, U.S. Patent 3,838,036, U.S. Patent 3,844,973, U.S. Patent 4,036,740, U.S. Patent 4,176,084, U.S. Patent 4,206,038 and U.S. Patent 4,300,997.

The prior art has failed to eliminate the pollution problem from the effluent of a fluidized catalytic

cracker regenerator. It has also failed to appreciate the valuable by-products which are formed as the gaseous effluent from a regenerator, particularly when it is operated with an oxygen-containing gas which is diluted with carbon dioxide. Finally, the prior art has failed to recognize an efficient recycle process for the reintroduction of un-utilized oxygen and effluent carbon dioxide in an oxygen and carbon dioxide operated regenerator.

## BRIEF SUMMARY OF THE INVENTION

The present invention is directed to a process for the regeneration of catalyst from a fluidized catalytic cracking reactor wherein the catalyst is withdrawn from a fluidized catalytic cracking reactor and is passed to a fluidized regenerator in which the catalyst is regenerated by the combustion and removal of carbon from the catalyst and the catalyst is then withdrawn from the regenerator and returned to the cracking reactor, such process comprising the steps of: introducing nitrogen-free oxygen diluted with carbon dioxide into the regenerator as a fluidizing and combustion gas; regenerating spent catalyst with said nitrogen-free oxygen and carbon dioxide gas by combustion of said carbon; recovering the effluent gas from said regenerator which contains carbon monoxide, carbon dioxide, oxygen, sulfur oxides, nitrogen oxides and water; reducing the nitrogen oxides in said effluent gas by subjecting said gas to a high temperature reducing atmosphere which decomposes the nitrogen oxides; oxidizing the carbon monoxide in said effluent gas to carbon dioxide by combusting the carbon monoxide with added oxygen; cooling the oxidized effluent gas to partially condense water and sulfur oxides with separation of the condensate from said effluent gas; splitting the cooled effluent gas into a carbon dioxide

recycle stream and a net gas stream; recycling the carbon dioxide recycle stream to the regenerator and mixing it with nitrogen-free oxygen gas as the fluidizing and combustion gas of step a); and compressing, aftercooling and drying the net gas stream; separating the dried net gas stream by fractional distillation into a sulfur oxides stream, an essentially pure carbon dioxide stream and an oxygen and carbon dioxide-containing stream.

Preferably the sulfur oxide-containing stream can be processed in a Claus plant to produce a valuable sulfur by-product.

An advantage of the present process is the utilization of the pure carbon dioxide stream as a recovery medium for an enhanced oil recovery operation.

Alternately, in another embodiment the regeneration process can comprise the steps of:

introducing nitrogen-free oxygen gas diluted with carbon dioxide into the regenerator as a fluidizing and combustion gas; regenerating spent catalyst with said gas at a temperature in excess of 1300°F; recovering the effluent gas from said regenerator, which gas contains, carbon monoxide, carbon dioxide, oxygen, sulfur oxides, nitrogen oxides and water; cooling and recovering waste heat from said effluent gas stream; compressing said effluent stream to a higher pressure and aftercooling said compressed stream; separating sulfur oxides from said stream by contact of the stream with a physical solvent which selectively absorbs sulfur oxides over the remaining components of the stream; shifting the carbon monoxide content of the effluent stream with steam to carbon dioxide and hydrogen over a shift catalyst while reacting the oxygen and nitrogen oxides over said catalyst to eliminate such components from the effluent stream; separating the

resulting hydrogen from the carbon dioxide in said effluent stream by contact of said stream with a second physical solvent to selectively absorb carbon dioxide over hydrogen; recovering a concentrated hydrogen product stream and a carbon dioxide product stream, part of which is recycled to the regenerator as the carbon dioxide diluent for the nitrogen-free, oxygen gas of step (a).

The process of the present invention is also applicable to regeneration of inert particulate matter from a reactor processing and upgrading petroleum crude prior to a fluidized catalytic cracking reactor.

Alternatively, the present invention can be used to regenerate coke in fluid coking and heat and gasify coke in FLEXICOKING.

When operating the regenerator at a 70% by volume carbon dioxide, 30% by volume oxygen feed in line 22, at approximately 20 psig and a temperature in the range of 1300 to 1500°F, the endothermic Boudouard reaction:

$$CO_2 + C \rightleftharpoons 2CO$$

will proceed to a significant extent to supplement the oxygen in decoking the catalyst while reducing the regeneration oxidant gas flow and regeneration reaction heat release. This reaction can be catalyzed by promoters added to the cracking catalyst to increase the extent of the Boudouard reaction and to lower the temperatures at which this reaction occurs.

BRIEF DESCRIPTION OF THE DRAWINGS

FIG 1 shows a flow scheme of the preferred embodiment of the present invention for the separation and recycle of gases from the effluent of a fluidized catalytic cracker regenerator.

FIG 2 shows an alternate embodiment of the present invention for the separation and recycle of gases from the effluent of a fluidized catalytic cracker regenerator.

DETAILED DESCRIPTION OF THE INVENTION

Fluidized catalytic cracker catalyst regeneration with essentially pure oxygen and a diluent such as carbon dioxide, wherein the oxygen content is 60% to 21%, preferably 30% of the total gas feed to the regenerator, eliminates the significant problems described in the prior art operations of regenerators, while enabling practical and economical recovery of carbon dioxide, hydrogen and sulfur by-products.

With reference to FIG 1, the process of the present invention will now be described in detail. An oil feed 10 is dispersed into hot regenerated catalyst 12 in the presence of steam 11. The dispersion passes upward through a riser reactor 13 where the endothermic cracking reactions occur, that also cool the catalyst and deposit coke on the catalyst to deactivate it. The reactor 13 discharges into a separator 15 where the bulk of the catalyst is disengaged. The cracked product vapors pass through a cyclone 18 to separate entrained catalyst and then go to further processing 19. Catalyst in the fluidized catalytic cracking reactor, which has been deactivated by the coking of the catalyst surface with carbon deposits passes down through the reactor stripper 16 where hydrocarbons are removed overhead by steam in line 14. The catalyst now in line 17 is introduced into a typical regenerator 20, which constitutes a fluidized up flow reactor. The catalyst experiences an oxidizing high temperature environment in which the coked carbon deposits on the catalyst are combusted and removed from the catalyst in the gas phase as combustion products such as carbon dioxide and carbon monoxide, as

well as other effluent impurities. The combustion-cleaned catalyst is then continuously returned to the cracker reactor for further catalytic duty through line 12.

In the present invention, the oxidizing gas which contacts the spent catalyst in the regenerator comprises a mixture of essentially pure oxygen and preferably a diluting portion of carbon dioxide introduced in line 22. Preferably, the oxygen would constitute 30% of the oxidizing gas, while carbon dioxide would constitute 70% of the gas as a diluent. The oxidizing gas is produced from the oxygen 76 separated in an air separation unit and the recycled carbon dioxide 75 from the effluent of the regenerator. The bulk of the oxygen reacts with the coke on the catalyst to heat it and regenerate or decoke it by the exothermic reactions: $C + \frac{1}{2}O_2 \rightarrow CO$ and $C + O_2 \rightarrow CO_2$. The heat capacity of the carbon dioxide will absorb some of the heat of reaction and moderate the regenerator temperature increases. The effluent from such an oxygen enriched regeneration is typically comprised of carbon dioxide 83%, water 9%, carbon monoxide 7%, oxygen 0.5%, sulfur oxides 0.5%, and nitrogen oxides 500 ppm. This effluent flue gas stream is separated from catalyst in cyclone separator 21. The regenerator 20 is of typical materials of construction and subject to typical temperature limitations. However, the carbon dioxide diluent of a 70/30 carbon dioxide/oxygen regeneration feed gas has a heat capacity equivalent to a nitrogen diluent in air. Accordingly, the higher oxygen concentration, while reducing regenerator velocities and relaxing velocity related capacity limitations will not increase regeneration temperatures above those for air regeneration.

When operating the regenerator at a 70% by volume carbon dioxide, 30% by volume oxygen feed in line 22, at approximately 20 psig and a temperature in the range of 1300 to 1500°F, the endothermic Boudouard reaction:

$$CO_2 + C \rightleftharpoons 2CO$$

will proceed to a significant extent to supplement the oxygen in decoking the catalyst while reducing the regeneration reaction heat release. This reaction can be catalyzed by promoters added to the cracking catalyst to increase the extent of the Boudouard reaction and to lower the temperatures at which this reaction occurs.

The flue gas stream in line 23 comprises carbon monoxide, oxygen, carbon dioxide, sulfur oxides nitrogen oxides and water. The latter components constitute noxious by-products which, if vented to the atmosphere, would present environmental pollution problems. Therefore, it is necessary to eliminate these components of the effluent flue gas stream 23. The stream 23 is expanded to recover power in a hot gas expander 24. Next it is introduced in line 25 into a nitrogen oxide reduction zone 26 wherein the nitrogen oxide content of the stream is reduced by the partial oxidation of a fuel 27 with oxygen from line 28 in the zone 26 at elevated temperatures to produce additional carbon dioxide and to decompose nitrogen oxides to nitrogen as a result of the reducing atmosphere which exists in the zone 26. The nitrogen oxide reduction zone 26 can be either a catalytic system or a thermal system. The thermal system operates in the manner of U.S. Patent 3,873,671 or U.S. Patent 2,673,141, both of which are incorporated herein by reference. A thermal nitrogen oxide reduction zone is operated at a temperature of approximately 1200°C at which the nitrogen oxide becomes unstable and decomposes spontaneously. Although the

temperature of the effluent gas is relatively high at 725°C, if the thermal nitrogen oxide reduction process is utilized, it may be necessary to introduce additional oxygen and a reducing amount of hydrogen, as well as a fuel, in order to achieve the necessary temperature for nitrogen oxide decomposition and reduction in the thermal incineration process.

The resultant stream from the nitrogen oxides reduction zone 26 is led through reduction chamber 29 where the nitrogen oxides are reduced to the furthest extent. The effluent then passes to an oxidation zone 30 fed by pure oxygen in line 32 and carbon dioxide in line 33. In the carbon monoxide oxidation zone 30, the effluent flue gas stream less nitrogen oxides is subjected to further oxidation in the presence of the additional oxygen. The residual carbon monoxide and any fuels in the effluent flue gas stream are combusted to carbon dioxide. This combustion treatment of the effluent flue gas stream further elevates the temperature of the stream. Therefore, it is necessary to moderate the combustion temperature and to cool the stream before further processing. The moderation is achieved by recycling carbon dioxide in line 33. The hot combustion gases then pass through a waste heat boiler 31 and are cooled to about 260°C to generate steam. Alternately, where conditions allow nitrogen oxides to build up, the nitrogen oxides treatment can be bypassed.

The oxidized effluent stream, now in line 37 and consisting of carbon dioxide, oxygen, sulfur oxides and water, is quenched in a quench tower 38 against a spray of cool water from line 43. Some of the sulfur oxides, particularly sulfur trioxide are removed from the bottom of the quench tower 38 in line 39 as sour water. Makeup water can be added in line 40 although the moisture introduced in the effluent stream may be

sufficient to adjust water loss. The sour water is pumped to pressure in pump 41 before being cooled in cold water heat exchanger 42. The net sour water condensate is removed in line 45. The remaining cooled water is recycled to the quench tower 38 in line 43. A sulfur-diminished effluent stream is removed from the overhead of the tower 38 in line 44.

At this point in the processing, a portion of the effluent stream is then separated into a recycle stream 51 and a remaining stream 50. Preferably the recycle stream 51 would be set to dilute the oxygen in stream 35 to 30% and would be about 70% of stream 44. The remaining stream 12 comprises the balance of 30%. The recycle stream in line 51 is directed back to the inlet of the regenerator 20 to be blended with pure oxygen in line 39 and introduced into the regenerator 20. The carbon dioxide acts as a diluent to control oxidation and the peak temperature of the regenerator and catalyst being regenerated. The recycle 51 can be supplemental with additional carbon dioxide 74 from downstream processing.

The remaining stream in line 50 is then directed through a multistaged, intercooled compressor 52 to achieve an exit pressure of about 600 psig. Sour, sulfur oxides-containing condensate streams are separated in the intercooling heat exchangers 48 and 49 and removed in lines 46 and 47 and join the previous sulfur removal stream in line 45. The compressed effluent stream in line 53 is then aftercooled in heat exchangers 54 and 56 and additional sour water is removed from the stream.

The effluent stream is cooled to about 40°F. The stream, now in line 58 is dehydrated in drier 59. The drier 59 can constitute a switching bed of dessicant such as alumina or it can be any other known drying means for gas streams, such as a recirculating glycol treatment.

The dried effluent stream in line 60 is introduced into a distillation column 61 wherein the carbon dioxide component of the stream is separated from residual sulfur oxides in the stream. The sulfur oxides are removed from the distillation column 61 as a bottom stream in line 62. This stream can be further processed in a Claus plant 63 to provide an elemental sulfur product for sale or export. Reboil for the column is supplied in heat exchanger 64. An essentially pure carbon dioxide liquid product can be taken as a sidestream from the rectification section of the distillation column and exported as a product. This product stream is removed in line 65. The carbon dioxide mid-cut stream is sufficiently pure such that it may be pipelined and utilized in other industrial processes such as enhanced oil recovery operations. A carbon dioxide and oxygen-containing overhead stream is removed from the distillation column 61 in line 68. Reflux is provided for the upper portion of the column 61 by cooling the overhead stream 68 in a refrigerated heat exchanger 69. A part of the stream is condensed and returned in line 70 as the reflux. The remaining portion of the overhead stream is removed from the heat exchanger 69 in line 71. This stream may also be recycled to the fluidized catalytic cracking regenerator 20 and mixed with the oxygen in line 39 or delivered to the oxidation zone 30. This latter recycle in line 74 allows for complete utilization of the oxygen introduced into the regeneration and recycle system of the present invention. Alternately, the oxygen and carbon dioxide-containing stream in line 71 may be vented to the atmosphere through valve 72 and line 73.

Under some circumstances, diluent carbon dioxide in stream 75 may be imported or it may be desirable to operate the regenerator utilizing pure oxygen undiluted

with carbon dioxide. Under these circumstances, all of stream 44 will be compressed and stream 73 can be vented or added to stream 35. Under the circumstances of pure oxygen gas introduction into the regenerator, increased temperatures of about 50°C can be expected to be experienced by the catalyst and the regenerator. In some regeneration systems it would be expected that oxygen atmospheres in the heated regenerator would not approximate dangerous conditions in light of the back mixing in the fluidized bed of the regenerator, in which oxygen would be rapidly mixed with the constituents and gas phase existing in the regenerator. Accordingly, to the extent that complete back mixing occurs, the regeneration of catalyst with pure oxygen would not necessarily result in excessive temperatures. All back mix systems, however, do involve a finite mixing zone. In such a fluidized catalytic cracker regeneration mixing zone, oxygen concentrations would traverse the range from essentially 100% oxygen at the inlet zone of the regenerator to extremely low concentrations of oxygen at the effluent zone of the reactor. In the preliminary mixing zones of the regenerator, excessive high oxygen reaction rates and heat release could be expected to give locally high temperatures that could damage some catalysts and regeneration equipment materials. Additionally, inlet oxygen metal piping and distributors in some systems might be expected to ignite and burn in such pure oxygen atmospheres. Therefore, in such systems, it would be preferable to utilize the preferred embodiment of the present invention in which the inlet gas to the regenerator contains a predominant amount of carbon dioxide diluent such as is supplied in the present invention through lines 51 or 74 or from an extraneous source providing fresh carbon dioxide. The molar heat capacity of carbon dioxide is about 60%

greater than the molar heat capacity of nitrogen, and the mixing of a carbon dioxide diluent to 30% oxygen for the influent gas provides a heat capacity equivalent to air despite the enrichment of 30% oxygen existing in the inlet gas. This would favorably avoid metal component flammability and the overheating of catalyst with its attendant problems in catalyst life and activity.

In addition, carbon dioxide has further benefits. The reversible Boudouard reaction, discussed above, can proceed to a limited extent in fluidized catalytic cracker regeneration conditions to supplement oxygen in removing carbon from the catalyst. At temperatures above 1300°C in substantial carbon dioxide atmospheres, the carbon dioxide interacts with the carbon which is deposited on the spent catalyst to form carbon monoxide. This Boudouard reaction is quite endothermic in contrast to the exothermic combustion of carbon with oxygen to carbon dioxide. Therefore, to the extent that this reaction replaces oxygen in the removal of carbon deposits from the catalyst, the oxygen consumption in the regenerator is reduced, and its associated exothermic temperatures are sharply curtailed. A two-fold benefit is experienced in which a less exothermic oxygen-carbon reaction is occurring, and some of the heat from that exothermic reaction is utilized in the endothermic carbon dioxide-carbon reaction of the Boudouard reaction. At a set carbon dioxide and oxygen input ratio, reduced oxygen input is accompanied by reduced carbon dioxide input, and regenerator velocities are decreased for gas through-put in the fluidized bed of the regenerator. Regenerator velocities have been the limiting factor in the processing of heavier petroleum stocks and heavy residuum. These stocks present higher coking and carbon deposition of their respective catalysts in the cracking zone. Therefore, in regeneration of such

heavily coked and carbon deposited catalysts, a higher flow of regeneration gas is required in the regenerator. By utilizing the mixture of carbon dioxide and oxygen at temperatures and conditions favorable for the Boudouard reaction, the limitations of velocity are removed, additional through-put of stock can be processed in the fluidized catalytic cracker, and the subsequent spent catalyst flow rates which are also elevated can be handled in the regenerator without fear of blowing the catalyst system overhead in the fluidized bed of the regenerator. Thus, in processing heaving residuum in fluidized catalytic cracker operations where high carbon burn requirements result in excessive regenerator velocities and heat release, use of a mixture of carbon dioxide and oxygen regenerating gas decreases the heat release and reduces these velocities. With these limitations relaxed, fluidized catalytic cracking capacity of heavy residuum can be increased. The increased carbon dioxide partial pressure in regenerator effluent from pure oxygen or carbon dioxide-moderated oxygen fluidized catalytic cracker regeneration is also beneficial in suppressing after burning in the regeneration operation. As noted above, residuum feeds give increased nitrogen oxides formation during regeneration which aggravates carbon monoxide after burning, in that it catalyzes such high temperature after burning. Carbon dioxide, however, inhibits homogeneous gas phase combustion reactions, and the high carbon dioxide partial pressure will tend to counteract the catalytic effect of nitrogen oxides.

In FIG 2, an alternate embodiment of the present invention is shown in which carbon dioxide and oxygen are the feed to a typical fluidized catalytic cracking regenerator. A coked, spent catalyst from a fluidized catalytic cracker is introduced into the regenerator as

in FIG 1 embodiment. The catalyst is regenerated by an upflow, in a fluidizing manner, of a pure oxygen gas which can be diluted, preferably, with carbon dioxide. The effluent stream from the regenerator is removed in line 123 and consists of the same components as described above. This effluent flue gas stream 123 is cooled by heat exchange in a waste heat boiler 125 against boiler feed water 127 to a temperature of about 260°C. The boiler feed water passes through the boiler 125, is preheated and enters a phase separator 131 by means of line 129. Heated water is recycled in line 135 and circulated through the boiler tubes to generate steam which is collected in manifold 137 and delivered to the separator 131 for steam removal as stream 133.

The cooled effluent stream in line 139 is then cooled to partially condense water and absorb any contained sulfur trioxide by being introduced into a quench tower 141 where it is contacted with a descending flow of cool water which partially condenses water and absorbs the sulfur trioxide content of the effluent. A sulfur-containing sour water is removed in line 143, pumped in pump 147, cooled in cold water heat exchanger 149, and recirculated in line 153 after the net sour water is removed in line 151. Makeup water can be introduced in line 147, or the effluent stream may contain sufficient water to provide for any shortage created by the removal of sour water in line 151. The cooled stream 155 is then combined with a recycle stream 189 and compressed in a multistage compressor 159 preferably to a pressure of about 600 psig. Interstage cooling is performed in exchangers 161 and 163 and sour water is removed in lines 165 and 167. The compressed gas 171 is then aftercooled to a temperature of about 40°C in aftercooling heat exchanger 173 which is supplied with ambient cold water and additional sour water is knocked out 175.

The cooled and compressed effluent flue gas stream now in line 177 is directed to a sulfur oxides absorber column 179. The column comprises a contact zone in which a countercurrent flow of a physical solvent, such as dimethyl ethers of polyethylene glycol, is contacted with the effluent flue gas stream. In this manner, the physical solvent, which has a selectivity for sulfur oxides and water over the other gas components of the effluent stream, removes such sulfur oxides and water as a bottom stream 183 comprising physical solvent, sulfur oxides and water which is reduced in pressure in valve 185. The pressure reduction is conducted as a flash reduction with the flashed stream separated in flash tank 187 into a gas phase of carbon monoxide, carbon dioxide and oxygen which is recycled in line 189 to the to the suction of the compressor 159, and a liquid phase containing sulfur oxides removed in line 191. The liquid phase is reduced in pressure in valve 193 and introduced into a vacuum stripper column 195, which is fitted with a heated reboiler 199 to generate stripping vapor to strip sulfur oxides and water overhead. The overhead stream is cooled in cold water heat exchanger 205 and sour water is rejected in line 207. Saturated sulfur oxides are vacuum pumped in pump 209 to provide a sulfur oxides product above ambient pressure which can be fed to a Claus plant or a sulfuric acid plant 211. The physical solvent is recycled in line 197, through pump 201 and cooling heat exchanger 203 to line 181 for reuse in column 179.

The sulfur-free effluent flue gas stream 213 is then heated in heat exchanger 215. This gas consists of CO, $CO_2$ $H_2O$ and some $O_2$.

The heated stream 213 is then passed through a jet compressor 217 where it serves as a motive fluid to induce hot recycle gas in line 237. Steam is added to

the stream 219 from line 221 and the combined stream in line 223 is introduced into the first 225 of three shift reactors 225, 239 and 243. Alternatively, the stream 221 can be used as the motive fluid for the jet compressor 217 or a suitable blower can be provided to recycle stream 237.

The shift reactor 225 contains a catalyst such as chrome promoted iron oxide. The shift reaction converts carbon monoxide as follows:

$$CO + H_2O \rightarrow H_2 + CO_2$$

The reaction partially shifts the carbon monoxide of the stream with exothermic heat release. Oxygen and nitrogen oxides are also reacted exothermically and eliminated over the shift catalyst. The reactions to $CO_2$ and $N_2$ contribute to a substantial temperature rise and it is necessary to cool the exit stream 227 from the reactor 225 in a heat exchanger 231. A portion of stream 227 is recycled through valve 229 and line 237 to the shift reactor 225. After cooling to 600°F, a portion of the stream in line 233 is likewise recycled passed valve 235. These streams serve to preheat the input gas to 600°F, reduce the CO content and provide $H_2$ for reducing $O_2$ and $NO_x$. The remaining cooled stream in line 233 undergoes a second shift in reactor 239. This reactor also contains a chrome promoted iron oxide catalyst. Additional carbon monoxide is shifted in the reactor. The effluent is cooled in heat exchanger 241 to approximately 350°F and enters the third shift reactor 243 containing a zinc oxide-copper oxide catalyst.

The shifted effluent gas stream 245 is cooled in heat exchanger 247 to ambient temperature and a condensate is removed in line 249. The stream in line 251 comprises hydrogen, carbon dioxide, residual carbon monoxide and water. It enters a carbon dioxide absorber tower 253

where it is contacted with a physical solvent to absorb carbon dioxide. The solvent can be the dimethyl ethers of polyethylene glycol. A hydrogen product, essentially free of carbon dioxide is removed from the tower 253 as an overhead stream in line 257. The hydrogen stream 257 contains residual carbon monoxide that typically would be essentially completely eliminated by catalytic methanation.

The carbon dioxide loaded solvent is removed as a bottom stream 259 and is flashed in valve 261 before being phase separated in separator 263. Carbon dioxide is removed as an overhead stream in line 265 and is separated into a recycle stream 267 going to the oxygen feed to the regenerator and a carbon dioxide product stream 269 which is removed as a pure product that can be used for enhanced oil recovery operations or other export product uses.

The solvent in separator 263 is removed as a bottom stream 271 and introduced into a stripper column 273 where residual carbon dioxide is stripped from the solvent with nitrogen introduced in line 277 and the stripped gas is vented in line 275. The lean solvent is removed in line 279, pumped to pressure in pump 281, recycled in line 283 and cooled by heat exchange 285 before being re-introduced into tower 253 through line 255.

The gas feed to shift 213 contains a large fraction of carbon dioxide which is beneficial in tempering the temperature rise in the shift reactor 225. But, the high carbon dioxide content will provide an equilibrium constraint to reduce the conversion of carbon monoxide to hydrogen. It may therefore be beneficial to add an additional carbon dioxide absorber similar to absorber 253 to remove all or part of the carbon dioxide from the shift feed 213.

Although the invention has been described in several preferred embodiments with respect to regeneration of fluidized cracker catalyst, it is also contemplated that the invention can be practiced in other fluidized hydrocarbon and petroleum processing systems wherein particulate matter is continuously cycled from a reactor to a regenerator.

For example, the present invention can be utilized in the asphalt residuum treatment process (ART) of Englehard Minerals and Chemicals Corp., as described in U.S. Patent 4,243,514 which is incorporated by reference herein. In the ART process, a heavy residuum which is inappropriate for direct processing in a fluidized catalytic cracking reactor, is initially processed in a fluidized reactor containing a high temperature inert particulate matter, such as a specially treated kaolin clay. High boiling and coking components, as well as metals from the residuum are deposited on hot particulate matter in the fluidized reactor while the remaining residuum is vaporized and removed for refining in a fluidized catalytic cracker. The carbon and metals fouled particulate matter is removed to a regenerator where oxygen and carbon dioxide fluidize the fouled particulate matter and burn the carbon from the inert particles. Metal build-up is allowed to proceed until a predetermined level is achieved and fresh particulate matter is added and metal fouled inert particles are removed from the regenerator. The effluent from the regenerator is treated in a similar manner to that described above. Carbon dioxide from the effluent can be recycled to dilute and moderate the nitrogen-free oxygen feed to the inert particulate matter regenerator.

The present invention can also be practiced in a thermal fluidized cracking system. Exemplary of a thermal system is the fluidcoking process, such as is

described in U.S. Patent 2,527,575, which is incorporated by reference herein. In fluidcoking, a hydrocarbon feed, such as a heavy vacuum residuum, is cracked in a fluidized reactor loaded with hot particulate coke. The coke thermally cracks the residuum and in turn fresh carbonaceous matter deposits on the particulate coke. As the process continues the coke becomes larger and it is necessary to continuously remove some of the carbonaceous material coated coke to reheat it and reduce it in size. The coated coke is removed to a regenerator in order that some of the carbonaceous coating or coke can be burned to produce heat and to remove a part of the net carbon or coke produced in the reactor. Reheated coke is returned to the reactor and a coke product is removed from the regenerator. Again, this regenerator or coke burner can be fluidized and the combustion sustained with a mixture of oxygen and carbon dioxide. The resulting effluent can be treated, and the carbon dioxide recycled as described above.

In a variation of the fluidcoking system, a flexicoking process can also be operated in the manner of the present invention. Flexicoking burns the net coke such as is produced in fluidcoking to produce a low BTU fuel gas effluent of high temperature. This effluent, in turn, is used as the fluidizing gas in the regenerator or coke heater. As described in U.S. Patent 3,661,543, which is incorporated by reference herein, flexicoking is fluidized bed process wherein particulate matter in the form of hot coke cracks the hydrocarbon feed, usually a heavy residuum. Carbonaceous material in the form of additional coke is deposited on the particulate coke of the fluidized reactor, and the coke is lowered in temperature. Part of this coke is then continuously removed to a coke heater. In the coke heater, the cool coke is reheated by a hot, low BTU fuel gas produced by

the combustion of coke in yet another vessel, a coke gasifier or regenerator. The reheated coke is continuously returned to the reactor and the low BTU fuel gas which gave up heat to the coke is removed from the coke heater as an effluent. Carbon dioxide can be removed from the effluent and recycled to the gasifier as a diluent or modifier. The net coke from the reactor which passes through the heater is combusted in the gasifier which regenerates the heat necessary for thermal cracking. In the present invention, the gasifier is supplied with a stream of oxygen and carbon dioxide, the latter of which can be recycled carbon dioxide from the effluent of the coke heater. Thus in flexicoking, the oxygen/carbon dioxide is fed to the gasifier or heat regenerator, and the effluent to be treated is removed from the coke heater. This, of course, is the gas produced in the gasifier and heat exchanged in the coke heater.

In this context, the term particulate matter refers to a number of substrates which can be used in a fluidized hydrocarbon refining reactor as contact particles, such as catalyst for catalytic cracking, inert clays for the asphalt residual treatment and coke for the fluidcoking and flexicoking processes. The carbon or coke build-up on such particles is generally termed carbonaceous material. Lastly, in this specification, the term regenerator is understood to include regenerators for fluidized catalytic cracking, burners for the asphalt residuum treatment and the fluidcoking process, and the coke gasifier for the flexicoking process.

The present invention has been described in detail with the specific embodiments set forth above, but it is deemed that the invention could be practiced by one skilled in the art with various modifications. Therefore, the scope of the present invention should not be deemed

to be limited to the specific embodiments set forth, but rather should be ascertained from the claims which follow.

## CLAIMS

1. A process for the regeneration of particulate matter from a fluidized reactor wherein the particulate matter is withdrawn from the fluidized reactor and is passed to a fluidized regenerator in which the particulate matter is regenerated by the combustion and removal of carbonaceous material from the particulate matter and the particulate matter is then withdrawn from the regenerator and returned to the fluidized reactor comprising the steps of:

(a) introducing nitrogen-free oxygen gas diluted with carbon dioxide into the regenerator as a fluidizing and combustion gas;

(b) regenerating carbonaceous material covered particulate matter with said nitrogen-free oxygen and carbon dioxide gas by combustion of said carbonaceous material;

(c) recovering the effluent gas from said regenerator, which contains carbon monoxide, carbon dioxide, oxygen, sulfur oxides, nitrogen oxides and water;

(d) reducing the nitrogen oxides in said effluent gas by subjecting said gas to a high temperature reducing atmosphere which decomposes the nitrogen oxides;

(e) oxidizing the carbon monoxide in said effluent gas to carbon dioxide by combusting the carbon monoxide with added oxygen;

(f) cooling the oxidized effluent gas to partially condense water and sulfur oxides and separating the condensates from said effluent gas;

(g) splitting the cooled effluent gas into a carbon dioxide recycle stream and a net gas stream; and

(h) recycling the carbon dioxide recycle stream to the regenerator and mixing it with nitrogen-free oxygen as the fluidizing and combustion gas of step (a).

2. The process of Claim 1, including the additional steps of:

(i) compressing, aftercooling and drying the net gas stream; and

(j) separating the dried net gas stream into a sulfur oxides stream, an essentially pure carbon dioxide stream and an oxygen and carbon-dioxide containing stream.

3. The process of Claim 2 wherein the oxygen and carbon dioxide-containing stream is recycled to the regenerator and mixed with the oxygen and carbon dioxide gas of step (a).

4. The process of Claim 1 wherein the effluent gas from the regenerator is expanded in a loaded expander to recover power.

5. The process of Claim 2 wherein the separation of the dried net gas stream is performed by fractional distillation.

6. The process of Claim 1 wherein the oxidation of carbon monoxide in the effluent gas is assisted by the introduction of a portion of the carbon dioxide recycle stream of step (g) into the oxidation zone where the carbon monoxide is combusted.

7. In a process of Claim 1 wherein the hot effluent gas from the carbon monoxide oxidation step

is passed through a waste heat boiler to recover heat from said gas by producing steam for work.

8. The process of Claim 2 wherein the essentially pure carbon dioxide stream is used in an enhanced oil recovery operation.

9. A process for the regeneration of catalyst from a fluidized catalytic cracking reactor wherein the catalyst is withdrawn from the fluidized catalytic cracking reactor and is passed to a fluidized regenerator in which the catalyst is regenerated by the combustion and removal of carbon from the catalyst and the catalyst is then withdrawn from the regenerator and returned to the fluidized catalytic cracking reactor comprising the steps of:

(a) introducing nitrogen-free oxygen gas diluted with carbon dioxide into the regenerator as a fluidizing and combustion gas;

(b) regenerating spent catalyst with said nitrogen-free oxygen and carbon dioxide gas by combustion of said carbon;

(c) recovering the effluent gas from said regenerator, which contains carbon monoxide, carbon dioxide, oxygen, sulfur oxides, nitrogen oxides and water;

(d) reducing the nitrogen oxides in said effluent gas by subjecting said gas to a high temperature reducing atmosphere which decomposes the nitrogen oxides;

(e) oxidizing the carbon monoxide in said effluent gas to carbon dioxide by combusting the carbon monoxide with added oxygen;

(f) cooling the oxidized effluent gas to partially condense water and sulfur oxides with separation of the condensate from said effluent gas;

(g) splitting the cooled effluent gas into a carbon dioxide recycle stream and a net gas stream; and

(h) recycling the carbon dioxide recycle stream to the regenerator and mixing it with nitrogen-free oxygen as the fluidizing and combustion gas of step (a).

10. The process of Claim 9, including the additional steps of:

(i) compressing, aftercooling and drying the net gas stream; and

(j) separating the dried net gas stream into a sulfur oxides stream, an essentially pure carbon dioxide stream and an oxygen and carbon-dioxide containing stream.

11. The process of Claim 10 wherein the oxygen and carbon dioxide-containing stream is recycled to the regenerator and mixed with the oxygen and carbon dioxide gas of step (a).

12. The process of Claim 9 or 10 wherein the effluent gas from the regenerator is expanded in a loaded expander to recover power.

13. The process of Claim 9 or 10 wherein regeneration is conducted under conditions to maximize the Boudouard reaction.

14. The process of Claim 10 wherein the separation of the dried net gas stream is performed by fractional distillation.

15. The process of Claim 9 wherein the oxidation of carbon monoxide in the effluent gas is assisted by the introduction of a portion of the carbon dioxide recycle stream of step (g) into the oxidation zone where the carbon monoxide is combusted.

16. The process of Claim 9 or 10 wherein the hot effluent gas from the carbon monoxide oxidation step is passed through a waste heat boiler to recover heat from said gas by producing steam for work.

17. The process of Claim 10 wherein the essentially pure carbon dioxide stream is used in an enhanced oil recovery operation.

18. A process for the regeneration of particulate matter from a fluidized reactor wherein the particulate matter is withdrawn from the fluidized reactor and is passed to a fluidized regenerator in which the particulate matter is regenerated by the combustion and removal of carbonaceous material from the particulate matter and the particulate matter is then withdrawn from the regenerator and returned to the fluidized reactor comprising the steps of:

(a) introducing nitrogen-free oxygen gas diluted with carbon dioxide into the regenerator as a fluidizing and combustion gas;

(b) regenerating carbonaceous material covered particulate matter with said gas;

(c) recovering the effluent gas from said regenerator, which gas contains, carbon monoxide, carbon dioxide, oxygen, sulfur oxides, nitrogen oxides and water;

(d) cooling and recovering waste heat from said effluent gas stream while partially condensing sulfur oxides and water;

(e) compressing said effluent stream to a higher pressure and aftercooling said compressed stream;

(f) separating sulfur oxides from said stream by contact of the stream with a physical solvent which selectively absorbs sulfur oxides over the remaining components of the stream;

(g) shifting the carbon monoxide content of the effluent stream to hydrogen and carbon dioxide over a shift catalyst while reacting the oxygen and nitrogen oxides over said catalyst to eliminate such components from the effluent stream;

(h) separating the resulting hydrogen from the carbon dioxide in said effluent stream by contact of said stream with a second physical solvent to selectively absorb carbon dioxide over hydrogen; and

(i) recovering a substantially pure hydrogen product stream and a carbon dioxide product stream at least a part of which is recycled to the regenerator as a diluent for the nitrogen-free gas of step (a).

19. The process of Claim 18 wherein a portion of the carbon dioxide product stream can be removed for export to an enhanced oil recovery operation.

20. The process of Claim 18 wherein sulfur trioxide is removed from the effluent stream after water heat recovery by contacting said stream with cool water in a contact column.

21. The process of Claim 18 wherein the effluent shift feed of step (g) is used as the motive fluid for a jet compressor to recycle cooled effluent from shift to the influent of the shift reactor.

22. The process of Claim 18 wherein the sulfur oxides-containing physical solvent is regenerated by flashing and stripping in a reboiled column before being recycled to the absorber column.

23. A process for the regeneration of catalyst from a fluidized catalytic cracker wherein the catalyst is withdrawn from the fluidized catalytic cracking reactor and is passed to a fluidized regenerator in which the catalyst is regenerated by the combustion and removal of carbon from the catalyst and the catalyst is then withdrawn from the regenerator and returned to the cracking reactor comprising the steps of:

(a) introducing nitrogen-free oxygen gas diluted with carbon dioxide into the regenerator as a fluidizing and combustion gas;

(b) regenerating spent catalyst with said gas;

(c) recovering the effluent gas from said regenerator, which contains carbon monoxide, carbon dioxide, oxygen, sulfur oxides, nitrogen oxides and water;

(d) cooling and recovering waste heat from said effluent gas stream while partially condensing sulfur oxides and water;

(e) compressing said effluent stream to a higher pressure and aftercooling said compressed stream;

(f) separating sulfur oxides from said stream by contact of the stream with a physical solvent which selectively absorbs sulfur oxides over the remaining components of the stream;

(g) shifting the carbon monoxide content of the effluent stream to hydrogen and carbon dioxide over a shift catalyst while reacting the oxygen and nitrogen oxides over said catalyst to eliminate such components from the effluent stream;

(h) separating the resulting hydrogen from the carbon dioxide in said effluent stream by contact of said stream with a second physical solvent to selectively absorb carbon dioxide over hydrogen; and

(i) recovering a substantially pure hydrogen product stream and a carbon dioxide product stream at least part of which is recycled to the regenerator as a diluent for the nitrogen-free gas of step (a).

24. The process of Claim 23 wherein a portion of the carbon dioxide product stream can be removed for export to an enhanced oil recovery operation.

25. The process of Claim 23 wherein sulfur trioxide is removed from the effluent stream after water heat recovery by contacting said stream with cool water in a contact column.

26. The process of Claim 23 wherein the effluent shift feed of step (g) is used as the motive fluid for a jet compressor to recycle cooled effluent from shift to the influent of the shift reactor.

27. The process of Claim 23 wherein the sulfur oxides-containing physical solvent is regenerated by flashing and stripping in a reboiled column before being recycled to the absorber column.

28. A process for the reheating and partial gasification of particulate coke from a fluidized reactor wherein the particulate coke is withdrawn from the fluidized reactor and is passed to a fluidized coke heater in which the coke is heated by hot reducing fuel gas and a portion of the heated coke is returned to the fluidized reactor while the remaining heated coke is gasified in a coke gasifier to hot reducing fuel gas for the coke heater, comprising the steps of:

(a) introducing nitrogen-free oxygen gas diluted with carbon dioxide into the coke gasifier as a fluidizing and combustion gas;

(b) gasifying coke by combustion with said oxygen and carbon dioxide gas to produce a high temperature reducing fuel gas;

(c) contacting coke in said coke heater with said high temperature reducing fuel gas to heat the coke for recycle to the fluidized reactor;

(d) recovering the effluent gas from said coke heater which contains carbon monoxide, carbon dioxide, sulfur-containing compounds, nitrogen oxides, hydrogen, methane and water;

(e) reducing the nitrogen oxides in said effluent gas by subjecting said gas to a high temperature reducing atmosphere which converts the nitrogen oxides to free nitrogen;

(f) oxidizing the carbon monoxide in said effluent gas to carbon dioxide by combusting the carbon monoxide with added oxygen;

(g) cooling the oxidized effluent gas to partially condense water and sulfur oxides with separation of the condensate from said effluent gas;

(h) splitting the cooled effluent gas into a carbon dioxide recycle stream and a net gas stream; and

(i) recycling the carbon dioxide recycle stream to the gasifier and mixing it with nitrogen-free oxygen as the fluidizing and combustion gas of step (a);

29. The process of Claim 28 including the steps of:

(j) compressing, aftercooling and drying the net gas stream;

(k) separating the dried gas stream into a sulfur oxides stream, an essentially pure carbon dioxide stream and an oxygen and carbon-dioxide containing stream.

30. The process of Claim 29 wherein the oxygen and carbon dioxide-containing stream is recycled to the gasifier with the oxygen and carbon dioxide gas of step (a).

31. A process for the regeneration of catalyst from a fluidized catalytic cracking reactor wherein the catalyst is withdrawn from the fluidized catalytic cracking reactor and is passed to a fluidized regenerator in which the catalyst is regenerated by the combustion and removal of carbon from the catalyst and the catalyst is then withdrawn from the regenerator and returned to the cracking reactor comprising the steps of:

(a) introducing nitrogen-free oxygen gas diluted with carbon dioxide into the regenerator as a fluidizing and combustion gas;

(b) regenerating spent catalyst with said oxygen and carbon dioxide gas by combustion of said carbon from said catalyst;

(c) recovering the effluent gas from said regenerator, which contains carbon monoxide,

carbon dioxide, oxygen, sulfur oxides, nitrogen oxides and water;

(d) oxidizing the carbon monoxide in said effluent gas to carbon dioxide by combusting the carbon monoxide with added oxygen;

(e) cooling the oxidized effluent gas to partially condense water and sulfur oxides and separating the condensates from said effluent gas;

(f) splitting the cooled effluent gas into a carbon dioxide recycle stream and a net gas stream; and

(g) recycling the carbon dioxide recycle stream to the regenerator and mixing it with nitrogen-free oxygen as the fluidizing and combustion gas of step (a).

32. The process of Claim 31 including the additional steps of:

(h) compressing aftercooling and drying the net gas stream;

(i) separating the dried net gas stream by fractional distillation into a sulfur oxides stream, an essentially pure carbon dioxide stream and an oxygen and carbon-dioxide containing stream.

33. A process for the regeneration of catalyst from a fluidized catalytic cracking reactor wherein the catalyst is withdrawn from the fluidized catalytic cracking reactor and is passed to a fluidized regenerator in which the catalyst is regenerated by the combustion and removal of carbon from the catalyst and the catalyst is then withdrawn from the regenerator and returned to the cracking reactor comprising the steps of:

(a) introducing nitrogen-free oxygen gas diluted with carbon dioxide into the regenerator as a fluidizing and combustion gas;

(b) regenerating spent catalyst with said oxygen and carbon dioxide gas by combustion of said carbon from said catalyst;

(c) recovering the effluent gas from said regenerator, which contains carbon monoxide, carbon dioxide, oxygen, sulfur oxides, nitrogen oxides and water;

(d) reducing the nitrogen oxides in said effluent gas by subjecting said gas to a high temperature reducing atmosphere which converts the nitrogen oxides to free nitrogen;

(e) oxidizing the carbon monoxide in said effluent gas to carbon dioxide by combusting the carbon monoxide with added oxygen;

(f) splitting the effluent gas into a carbon dioxide recycle stream and a net gas stream;

(g) recycling the carbon dioxide recycle stream to the regenerator and mixing it with nitrogen-free oxygen as the fluidizing and combustion gas of step (a).

34. A process for the regeneration of catalyst from a fluidized catalytic cracking reactor wherein the catalyst is withdrawn from the fluidized catalytic cracking reactor and is passed to a fluidized regenerator in which the catalyst is regenerated by the combustion and removal of carbon from the catalyst and the catalyst is then withdrawn from the regenerator and returned to the cracking reactor comprising the steps of:

(a) introducing nitrogen-free oxygen gas diluted with carbon dioxide into the regenerator as a fluidizing and combustion gas;

(b) regenerating spent catalyst with said oxygen and carbon dioxide gas by combustion of said carbon from said catalyst;

(c) recovering the effluent gas from said regenerator, which contains carbon dioxide, oxygen, sulfur oxides, nitrogen oxides and water;

(d) cooling the effluent gas to partially condense water and sulfur oxides and separating the condensates from said effluent gas;

(e) splitting the cooled effluent gas into a carbon dioxide recycle stream and a net gas stream; and

(f) recycling the carbon dioxide recycle stream to the regenerator and mixing it with nitrogen-free oxygen as the fluidizing and combustion gas of step (a).

35. The process of Claim 34 including the additional steps of:

(g) compressing aftercooling and drying the net gas stream; and

(h) separating the dried net gas stream by fractional distillation into a sulfur oxides stream, a substantially pure carbon dioxide stream and an oxygen and carbon-dioxide containing stream.

36. The process of Claim 18 or 23 wherein after sulfur oxides removal from the effluent stream is step (f) carbon dioxide is removed from the stream before treatment in a shift reaction.

37. The process of Claim 18 or 23 wherein the shift reaction performed on the effluent stream in step (g) is performed with a recycle of a portion of the shifted gas back to the effluent stream admitted to said shift reaction zone.

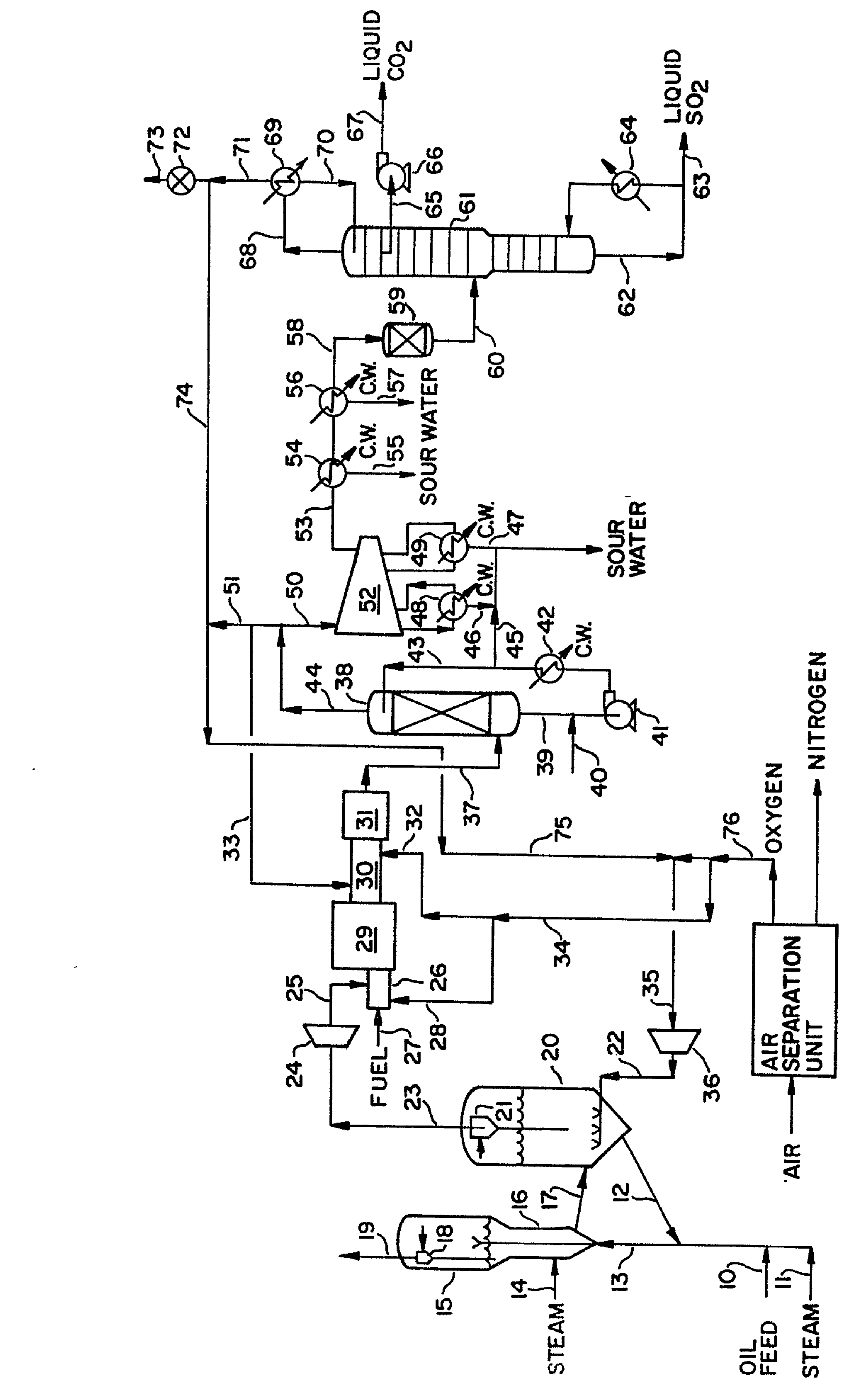
LIQUID $CO_2$
LIQUID $SO_2$
SOUR WATER
SOUR WATER
SOUR WATER
C.W.
C.W.
C.W.
C.W.
C.W.
OXYGEN
NITROGEN
AIR SEPARATION UNIT
AIR
FUEL
STEAM
OIL FEED
STEAM
10 11 12 13 14 15 16 17 18 19 20 21 22 23 24 25 26 27 28 29 30 31 32 33 34 35 36 37 38 39 40 41 42 43 44 45 46 47 48 49 50 51 52 53 54 55 56 57 58 59 60 61 62 63 64 65 66 67 68 69 70 71 72 73 74 75 76

FIG. 1

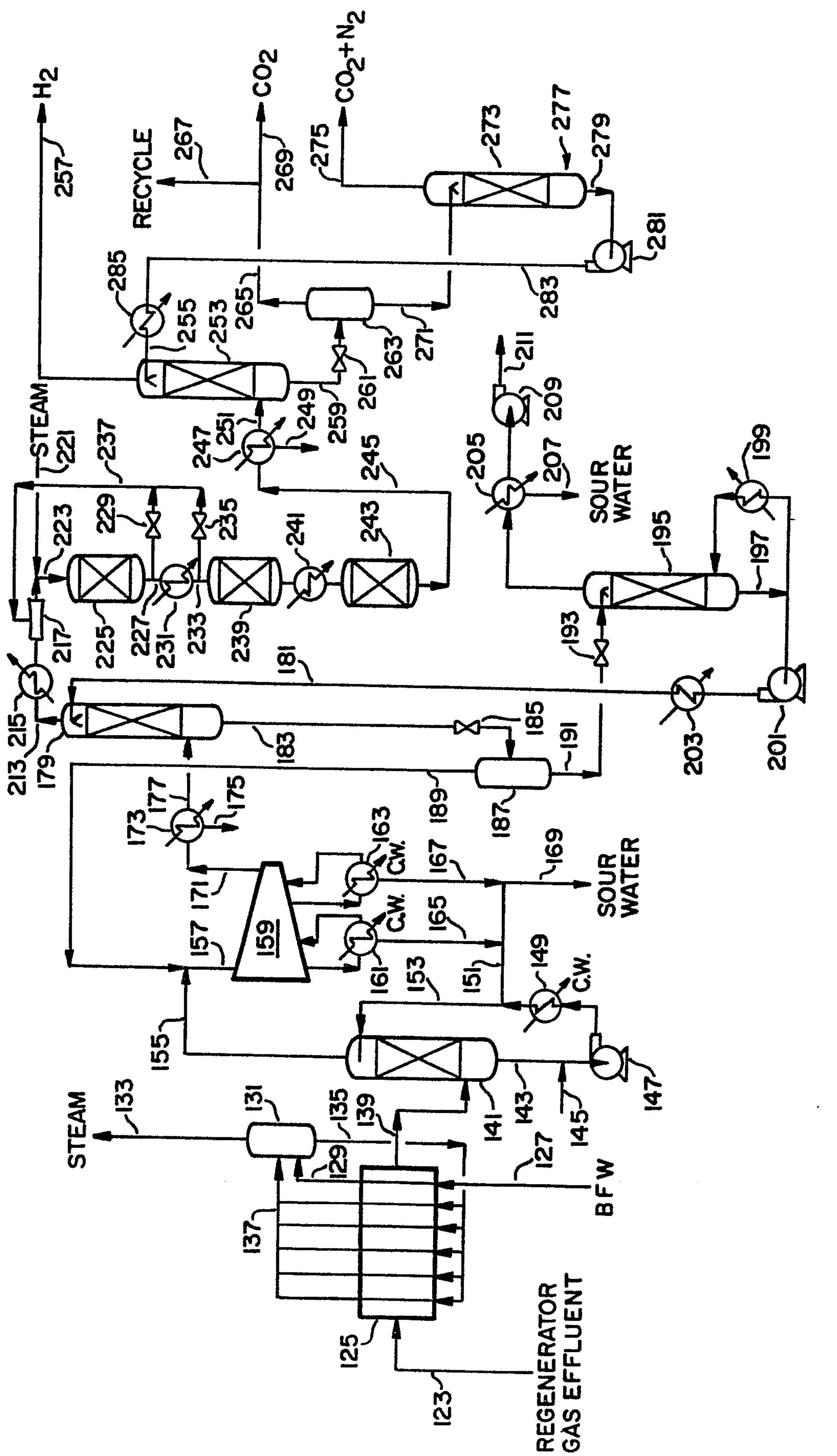
H2
CO2
CO2+N2
RECYCLE
STEAM
SOUR WATER
C.W.
BFW
REGENERATOR GAS EFFLUENT

FIG. 2